# EUROPEAN PATENT SPECIFICATION

(11) **EP 1 326 764 B1**
(45) Date of publication and mention of the grant of the patent: **07.03.2007**
(21) Application number: 01946414.8
(22) Date of filing: 15.06.2001
(51) Int. Cl.: B60R 1/12, B60R 1/074, B60R 1/068, B60R 1/072

(54) **MIRROR WITH INTERCHANGEABLE APPEARANCE COVERS**
SPIEGEL MIT WECHSELBARER DEKORATIONSKAPPE
MIROIR A REVETEMENTS DECORATIFS INTERCHANGEABLES

(30) Priority: 15.06.2000 US 211845 P
(43) Date of publication of application: 16.07.2003
(73) Proprietor: Schefenacker Vision Systems USA Inc., Marysville, Michigan 48040 (US)
(72) Inventor: REHILL, Graham, Chichester, West Sussex PO19 2DF (GB)
(74) Representative: Price, Nigel John King
(86) International application number: PCT/US2001/019262
(87) International publication number: WO 2001/096149

(56) References cited:
- EP-A- 0 644 084
- US-A- 5 450 246
- US-B1- 6 250 783
- PATENT ABSTRACTS OF JAPAN vol. 1995, no. 11, 26 December 1995 (1995-12-26) & JP 07 223489 A (TOKAI RIKA CO LTD), 22 August 1995 (1995-08-22)

## Description

The present invention relates to vehicle side view mirrors. More particularly, the present invention relates to a side view mirror assembly with interchangeable appearance covers, generally shown at 10 in the drawings.

The style, features and functions of vehicle side view mirrors have become increasingly important to both manufacturers and consumers in today's automotive and vehicle market. Typically, in the past, vehicle mirrors and features therein are designed for a particular model, with little, if any, interchangeability of parts.

A particular mirror design is designed specifically for a particular application with both mechanical features, such as a manually adjustable mirror or an electrically adjustable mirror, and stylistic design considerations being created for a single specific design. While these mirrors have been adequate, they require a separate manufacture for each type of design, whether foldable, manually adjustable or electrically adjustable or the like. Therefore, design changes either stylistically or feature-wise are hard to accomplish in a timely manner.

Thus, in the past, typically stylistic changes require entire rebuilds of the internal component and framework, along with the external stylistic changes. Therefore, it has been desirable to provide a system which will allow interchangeability of aesthetic features and various options. Preferably, the system would include a generic mirror control module over which various stylistic covers could be fitted to provide different stylistic looks to the mirror assembly.

The abstract of JP-07-223 489 discloses a mirror system in accordance with the pre-characterising portion of claim 1.

In accordance with the present invention, there is provided a mirror system according to claim 1. mirror system includes a first skeleton support structure operatively attached to a portion of a vehicle. The support structure including a mounting bracket therein. A removable cover adapted to be attached thereover for providing a stylistic. appearance to the bracket portion. A second support structure is provided for attachment to the bracket portion. A second support structure includes attachments for supporting a mirror assembly therein. The support assembly includes a connection structure. An outer interchangeable cover portion is provided, which is interchangeably fitted to the support structure for providing a variable stylistic outer surface to the mirror. A method according to claim 13 is also provided.

Therefore, the present invention allows interchangeability of the outer cover structure of the mirror or bracket while maintaining a common skeletal structure. This allows customization of the look and features found on or in the mirror. Customization as to the design for attachment to the door is also realized due to the interchangeable cover portions.

The invention will now be further described, by way of example only, with reference to the accompanying drawings, in which:-
Figure 1 is an exploded illustration showing a modular mirror system of the present invention;

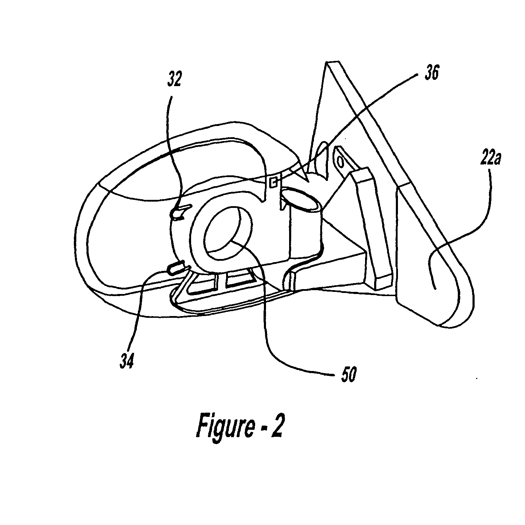

Figure 2 is a phantom view of the mirror system of the present invention;
Figure 3 is a perspective view showing attachment of the mirror cover to the support;
Figure 4 is a perspective view showing the mirror cover attached to the mirror support;
Figure 5 is a perspective view showing attachment of the cover over the attachment support member; and
Figure 6 is a bottom view of the mirror assembly of the present invention.

The system 10 includes inner structural members which are a mirror support portion 12 and a mounting bracket 12a, generally shown at 12, 12a. Outer replaceable cover members, generally shown at 14, 14a, provide an outer stylistic appearance to the mirror. The cover members 14, 14a are interchangeable over the structure members 12, 12a from a first direction, generally shown by arrow A, and are snap fit on the lower member in a manner known in the art. A preferred embodiment includes an attachment structure 12a and a mirror support structure 12. Interchangeable covers 16, 18, 20, for changing the appearance, may be attached over the mirror structure. Alternatively, door attachment covers 22, 22a, 24, 26 may be readily attached to attachment member 12a for changing the appearance of the portion of the mirror which attaches to the car door, such as at the "sail" portion of the window. Thus, the internal components such as the foldable spring 42 and bushing 44 components could be used, or a modular powerfold mechanism could be interchangeably used, depending on the desired option. Additionally, mirror adjustment modular assemblies such as remote control electrical mirror assembly 46, remote control manual assembly 48, hard top adjustable mirror module assemblies, or mirror memory modules are interchangeable in the frame portion 50. Mirrors such as 18a and 20a are provided to match the covers 18 or 20 respectively.

The attachment 12a or mirror structures 12 include a portion 28 or 28a thereof, which becomes an outside show surface continuous with the cover after assembly. In a preferred embodiment, the cover is placed over the attachment structure and mirror support structure from the top, and then the opening in the cover matches a lower plate 28 or 28a, which forms the lower outer surface of the assembled mirror structure.

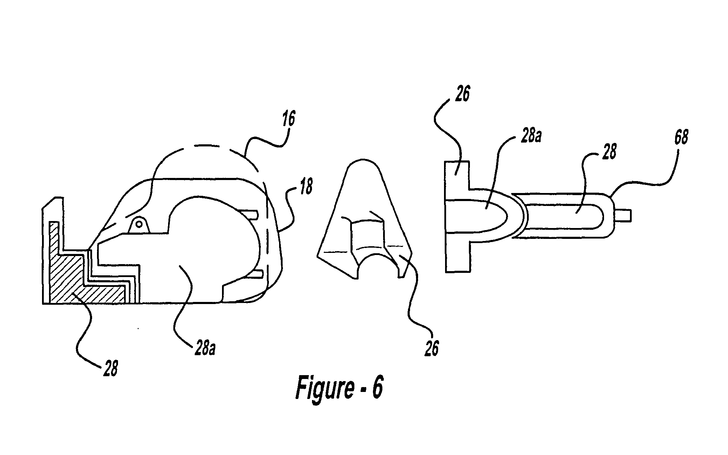

As can be seen from the drawings, the outer covers 16, 18, 20, 22, 24 or 26 all have apertures 30 or 30a in their base, which conform to lower surfaces 28 and 28a for forming a continuous surface on the bottom of the mirror, which shows only a slight line about the periphery of the base 28 or 28a, as shown in Figure 6.

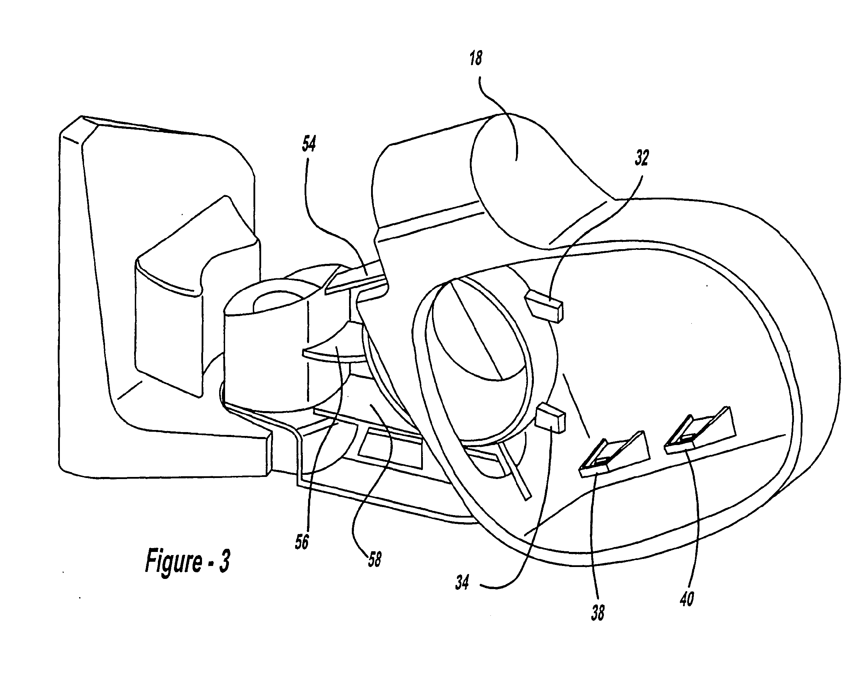

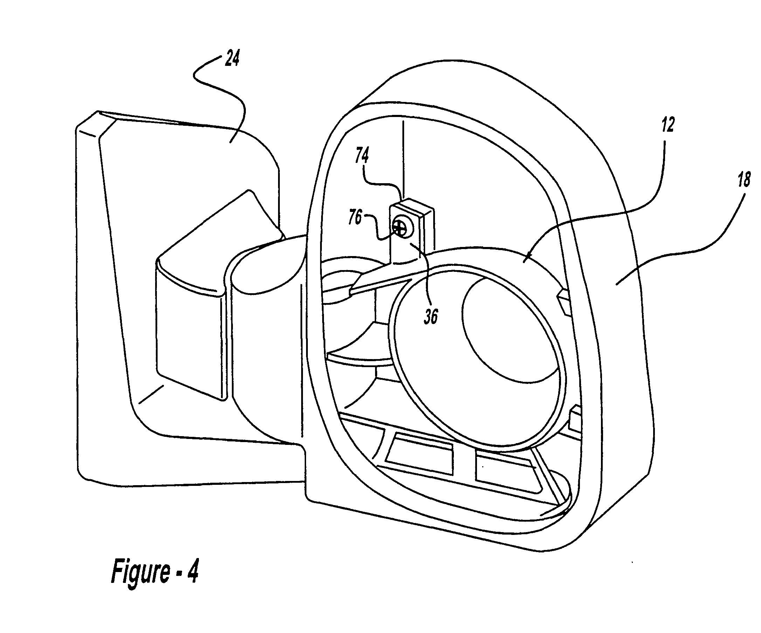

The mirror support attachment structure 12 includes attachment tabs 32, 34 and 36. The covers include vertical receiving structures 38 and 40. As best shown in Figures 3 and 4, the mirror cover 18 is applied over the mirror support structure 12a, first at an angle as shown in Figure 3. The tab 34 is placed in receiving structure 38. The mirror cover is then rotated such that tab 32 engages receiving structure 40. Thereafter, the cover is rotated further until the opening 30 engages bottom plate 28, as shown in Figure 4. A fastener 76 is then inserted at tab 36 for attachment to a suitable flange 74 on the cover 18 for securing the cover 18 to the mirror support structure 12. This is a method used with tabs on the sides. It should be readily appreciated that the tabs could be placed on the top of attachment structure 12, such that vertical movement is all that is necessary for applying the mirror cover. Similarly, snap fit attachment, such as a latch in a tang or tongue in groove securement, could also be used for final securement.

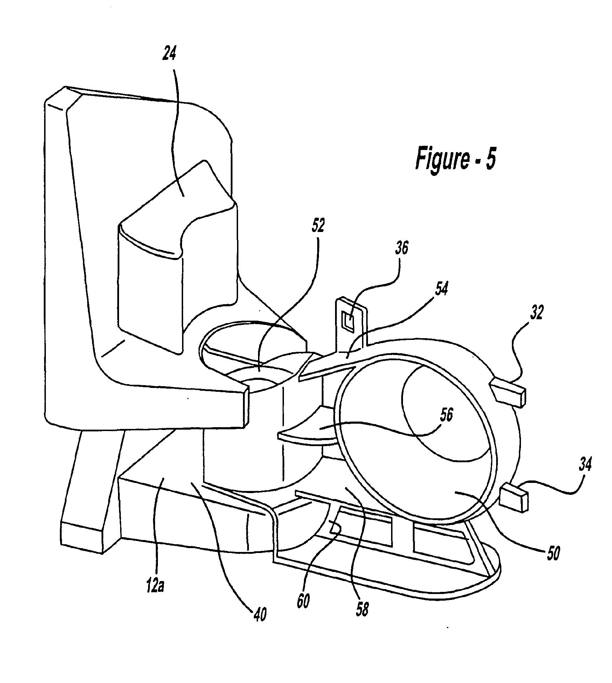

Similarly, an attachment cover 24 slides over the attachment member 12a. Attachment member 12a includes a tang 38. Tang 38 includes a slot therein which engages a "T" shaped attachment protrusion extending from the inside of the cover 24. The "T" shape is slid into the groove as the cover is moved down over the attachment member 12a, as shown in Figure 5. Additionally, the attachment member 12a includes attachment holes 40 at which fasteners can be inserted during sliding of cover downward, such as shown in Figure 5.

As set forth above, the mirror support structure includes a connection portion 52 for connection with the vehicle attachment portion 12a. As shown, this can be a mechanical folding type connection or it could be a fixed attachment. Alternatively, a power fold mechanism may be utilized in the design.

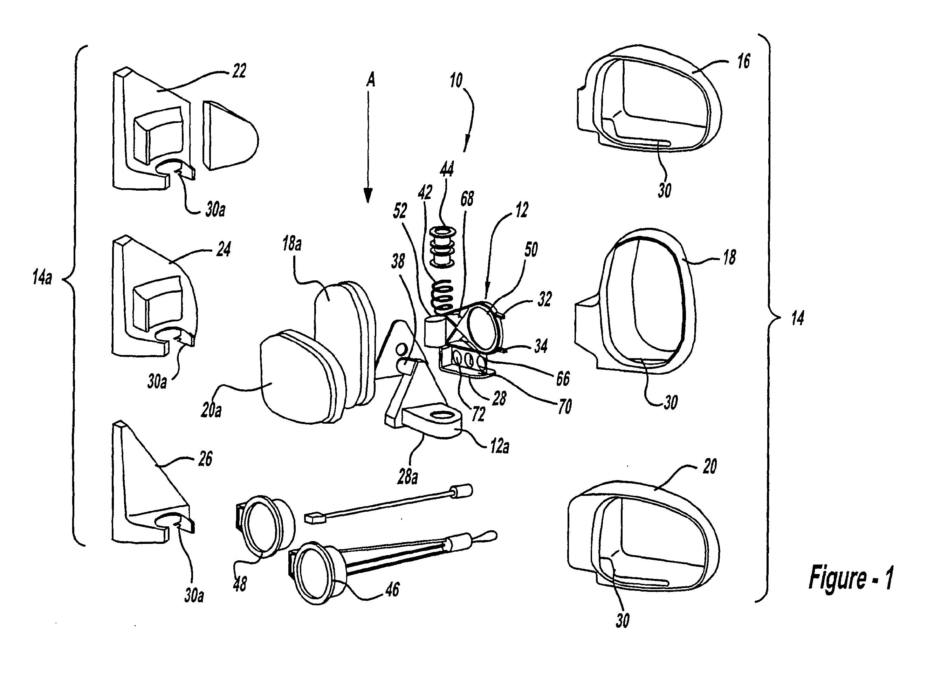

Additionally, the skeletal framework creating the rounded aperture 50 provides a mounting location for the mirror adjustment module (46 or 48). Preferably, horizontal ribs 54, 56 and 58 and vertical ribs 60, 62 and 64 provide the skeletal structure for supporting the framework and the overlying covers 16, 18 or 20. However, the skeletal structure shown in Figure 1 can also be utilized for structural support. As shown in Figure 1, this framework includes a pair of crossed support members 66 and 68 which support the mirror adjustment module. A horizontal rib 70 with a series of three cutouts is provided for attachment to the base 28.

In operation, appearance of the mirrors may be changed as desired, depending on the application. Additionally, if certain features are desired, such as turn signals, flood lights, puddle lights, spot lights, proximity sensors, speakers, intercoms, microphones, warning lights, temperature sensors or the like, can be incorporated into the mirror 28 or attachment portion 28a of the cover and then interchanged on the vehicle, either during manufacture or later at the dealer. These features are mountable either on the cover portion or the underlying frame. Thus, appearance, features, colors and shape may be easily customized using the present invention.

This modular functionality allows a variety of feature configurations. Thus, this system allows manufacturers consistent attachment and performance, which can be used on various vehicle platforms. It is only necessary to design the outer covers to match the door and type of mirror and choose the desired options. The modular nature allows low cost facelift opportunities for simplistic design changes. Low development costs for follow on program opportunities are achieved. Also, this system allows for reduced time to launch a new design, less engineering and test resources required, reduced tooling cost, and reduced capital investment. Thus, several manufacturing and mass production benefits are achieved while offering unique styling, appearance and features.

A further understanding of the present invention will be gleaned by referring to the appended materials.

## Claims

1. A mirror system comprising a mirror support portion (12) for supporting a mirror glass (18a,20a), said mirror support portion (12) **characterised by** a portion (28) forming part of the outside show surface of the assembled mirror continuous with an outer surface of a mirror cover (16,18,20) interchangeably attached to the support portion (12).

2. The mirror system of claim 1, wherein said mirror support portion (12) is a skeletonized support structure for supporting said mirror glass (18a,20a) and said cover portion (16,18,20).

3. The mirror system of claim 1 or 2, further comprising:
a bracket support (12a) adapted for attachment to a vehicle, said bracket support (12a) including a bracket for attachment of an outer decorative cover portion (22,24,26) attached to and covering said bracket (12a);
said mirror support portion being attached to said bracket and including a portion for receiving a mirror adjustment module (46,48) therein, said mirror support portion (12) including securement structure (32,34) thereon; and
said mirror cover (16,18,20) having cooperating structure (38,40) corresponding to said securement structure (2,34) for securing the cover thereto.

4. The mirror of claim 3, wherein said bracket support and said mirror support portion are foldable with respect to one another by means of a folding mechanism (42,44).

5. The mirror system of claim 4, wherein said folding mechanism can be interchanged between a manual fold and power fold mechanism.

6. The mirror system of any one of the preceding claims, wherein said mirror glass (18a,20a) is manually adjustable in said mirror support portion (12).

7. The mirror system of claim 6, wherein said mirror glass (18a,20a) is remotely adjustable from inside the vehicle.

8. The mirror system of any one of claims 1 to 5, wherein said mirror glass (18a,20a) is electronically adjustable from inside the vehicle.

9. The mirror system of claim 3, wherein a bottom portion of said bracket support (12a) forms an outer surface of said mirror housing.

10. The mirror system of claim 3, wherein the mirror support portion (12) is arranged to receive a generic module which is insertable for providing a manually top type adjustable mirror, an electronically adjustable mirror, a remote manually adjustable mirror, or an electrically adjustable mirror with memory.

11. The mirror system of claim 2, wherein said skeletonized support structure accepts a cover portion (16,18,20) selected from a plurality of different designs of cover portions having a commonly configured attachment securement structure (38,40).

12. The mirror system of any one of the preceding claims, wherein said bracket support (12a) includes a securement structure (38);
said securement structure (38) allows attachment of an outer cover (22,24,26) selected from a plurality of outer covers having unique designs with common connection structure for securement to said securement structure (38) of said bracket support (12a); and
said support portion (12) is configured for supporting one of a plurality of mirror control modules having pre-selected features.

13. A method of attaching an interchangeable cover (16,18,20) to a mirror support portion (12), said method comprising:
providing a mirror support portion (12), said mirror support portion (12) including a portion forming an outside show surface of the assembled mirror housing;
providing a mirror cover (16,18,20) having an opening (30) formed therein, which mirror cover is adapted to surround the portion so as to form a substantially continuous surface when assembled, wherein the mirror cover is slidable over the mirror support portion (12) for providing an outer cover to the assembled mirror; and
installing the mirror cover (16,18,20) over the mirror support portion (12) so as to attach said mirror cover (16,18,20) to said mirror support portion (12) and achieve a continuous outer show surface for the assembled mirror.

14. The method of claim 13, further comprising providing a bracket support (12a) for attachment to the vehicle, including an underlying framework and an interchangeable outer cover (22,24,26) for changing the stylistic appearance of said bracket.

15. The method of claim 14, wherein the mirror support portion (12) and the bracket support (12a) are foldably attached with respect to one another.

16. The method of claim 15, wherein said foldable attachment is interchangeable between a manual fold mechanism and a powerfold module.

17. The method of claim 13, further comprising providing a plurality of mirror cover styles for fitting over said support portion (12) and selecting a particular style and attaching it to the support portion (12).

18. The method of claim 13, wherein said mirror support portion (12) includes a control module accepting portion thereof for receiving an interchangeable mirror control module, said method further comprising providing an interchangeable support module, and snap fitting the module into said mirror support portion (12) prior to installing said mirror cover (16,18,20).

19. The method of claim 13, wherein said portion of said mirror support portion (12) being an outside show surface forms a bottom portion of the mirror housing when assembled.

## Patentansprüche

1. Spiegelsystem, enthaltend einen Spiegelstützbereich (12) zum Stützen eines Spiegelglases (18a, 20a), wobei der Spiegelstützbereich (12) **gekennzeichnet ist durch** einen Bereich (28), der einen Teil der außenseitigen Sichtoberfläche des zusammengebauten Spiegels bildet, die kontinuierlich zu einer Außenoberfläche einer Spiegelabdeckung (16, 18, 20) ist, die austauschbar an dem Stützbereich (12) angebracht ist.

2. Spiegelsystem nach Anspruch 1, wobei der Spiegelstützbereich (12) eine skelettierte Stützstruktur zum Stützen des Spiegelglases (18a, 20a) und des Abdeckbereichs (16, 18, 20) ist.

3. Spiegelsystem nach Anspruch 1 oder 2, weiter enthaltend:
eine Auslegerstütze (12a), die angepasst zum Anbringen an einem Fahrzeug ist, wobei die Auslegerstütze (12a) einen Ausleger zum Anbringen eines äußeren Dekorabdeckbereichs (22, 24, 26) enthält, der an dem Ausleger (12a) angebracht wird und diesen bedeckt;
wobei der Spiegelstützbereich an dem Ausleger angebracht ist und einen Bereich zum Aufnehmen eines Spiegeleinstellmoduls (46, 48) darin enthält, wobei der Spiegelstützbereich (12) eine Befestigungsstruktur (32, 34) darauf enthält; und
die Spiegelabdeckung (16, 18, 20) eine damit zusammenwirkende Struktur (38, 40) hat, die der Befestigungsstruktur (32, 34) zum Befestigen der Abdeckung daran entspricht.

4. Spiegelsystem nach Anspruch 3, wobei die Auslegerstütze und der Spiegelstützbereich bezüglich einander durch einen Faltmechanismus (42, 44) faltbar sind.

5. Spiegelsystem nach Anspruch 4, wobei der Faltmechanismus zwischen einem manuellen Faltmechanismus und einem angetriebenen Faltmechanismus ausgetauscht werden kann.

6. Spiegelsystem nach einem der vorhergehenden Ansprüche, wobei das Spiegelglas (18a, 20a) in dem Spiegelstützbereich (12) manuell justierbar ist.

7. Spiegelsystem nach Anspruch 6, wobei das Spiegelglas (18a, 20a) vom Inneren des Fahrzeugs fernjustierbar ist.

8. Spiegelsystem nach einem der Ansprüche 1 bis 5, wobei das Spiegelglas (18a, 20a) vom Inneren des Fahrzeugs elektronisch justierbar ist.

9. Spiegelsystem nach Anspruch 3, wobei ein Bodenbereich der Auslegerstütze (12a) eine Außenoberfläche des Spiegelgehäuses bildet.

10. Spiegelsystem nach Anspruch 3, wobei der Spiegelstützbereich (12) angeordnet ist, ein allgemeines Modul aufzunehmen, das zum Vorsehen eines manuellen von oben justierbaren Spiegels, eines elektronisch justierbaren Spiegels, eines manuell fernjustierbaren Spiegels oder eines elektrisch justierbaren Spiegels mit Speicher einsetzbar ist.

11. Spiegelsystem nach Anspruch 2, wobei die skelettierte Stützstruktur einen Abdeckbereich (16, 18, 20) annimmt, der aus einer Mehrzahl von unterschiedlichen Gestaltungen von Abdeckbereichen, die eine gemeinsam gestaltete Anbringbefestigungsstruktur (38, 40) haben, gewählt wird.

12. Spiegelsystem nach einem der vorhergehenden Ansprüche, wobei die Auslegerstütze (12a) eine Befestigungsstruktur (38) enthält;
wobei die Befestigungsstruktur (38) das Anbringen einer äußeren Abdeckung (22, 24, 26) erlaubt, die aus einer Mehrzahl von äußeren Abdeckungen gewählt wird, die einzigartige Gestaltungen bei einer gleichen Verbindungsstruktur zum Befestigen an der Befestigungsstruktur (38) der Auslegerstütze (12a) aufweisen; und
wobei der Stützbereich (12) gestaltet ist zum Stützen von einem einer Mehrzahl von Spiegelsteuermodulen, die vorgewählte Merkmale haben.

13. Verfahren zum Anbringen einer austauschbaren Abdeckung (16, 18, 20) an einem Spiegelstützbereich (12), wobei das Verfahren enthält:
Vorsehen eines Spiegelstützbereichs (12), wobei der Spiegelstützbereich (12) einen Bereich enthält, der eine außenseitige Sichtoberfläche des zusammengebauten Spiegelgehäuses bildet;
Vorsehen einer Spiegelabdeckung (16, 18, 20), die eine Öffnung (30) aufweist, die darin gebildet ist, wobei die Spiegelabdeckung angepasst ist, den Bereich so zu umfassen, dass eine im Wesentlichen kontinuierliche Oberfläche gebildet wird, wenn sie zusammengebaut sind, wobei die Spiegelabdeckung über den Spiegelstützbereich (12) zum Vorsehen einer äußeren Abdeckung für den zusammengebauten Spiegel verschiebbar ist; und
Montieren der Spiegelabdeckung (16, 18, 20) über dem Spiegelstützbereich (12), so dass die Spiegelabdeckung (16, 18, 20) an dem Spiegelstützbereich (12) angebracht wird und eine kontinuierliche äußere Sichtoberfläche des montierten Spiegels erhalten wird.

14. Verfahren nach Anspruch 13, weiter enthaltend das Vorsehen einer Auslegerstütze (12a) zum Anbringen an dem Fahrzeug, einschließlich eines darunter liegenden Rahmenwerks und einer austauschbaren Außenabdeckung (22, 24, 26) zum Verändern des stilistischen Erscheinungsbilds des Auslegers.

15. Verfahren nach Anspruch 14, wobei der Spiegelstützbereich (12) und die Auslegerstütze (12a) faltbar bezüglich einander angebracht werden.

16. Verfahren nach Anspruch 15, wobei die faltbare Anbringung zwischen einem manuellen Faltmechanismus und einem angetriebenen Faltmechanismus veränderbar ist.

17. Verfahren nach Anspruch 13, weiter enthaltend das Vorsehen einer Mehrzahl von Spiegelabdeckungsstyles zum Aufsetzen über den Stützbereich (12) und das Auswählen eines speziellen Styles und Anbringen von ihm an dem Stützbereich (12).

18. Verfahren nach Anspruch 13, wobei der Spiegelstützbereich (12) ein Steuermodul enthält, das einen Bereich davon zum Aufnehmen eines austauschbaren Spiegelsteuermoduls annimmt, wobei das Verfahren weiter das Vorsehen eines austauschbaren Stützmoduls enthält und das Einsetzen des Moduls in den Spiegelstützbereich (12) vor dem Installieren der Spiegelabdeckung (16, 18, 20) durch Einschnappen.

19. Verfahren nach Anspruch 13, wobei der Bereich des Spiegelstützbereichs (12), der eine außenseitige Sichtoberfläche ist, einen Bodenbereich des Spiegelgehäuses nach dem Zusammenbauen bildet.

## Revendications

1. Système de rétroviseur comprenant une partie support de rétroviseur (12) pour supporter un miroir (18a, 20a), ladite partie support de rétroviseur (12) étant **caractérisée par** une partie (28) formant partie de la surface visible extérieure du rétroviseur assemblé continue avec une surface extérieure d'un capot de rétroviseur (16, 18, 20) fixé de manière interchangeable à la partie support (12).

2. Système de rétroviseur selon la revendication 1, dans lequel ladite partie support de rétroviseur (12) est une structure de support ajourée pour supporter ledit miroir (18a, 20a) et ladite partie capot (16, 18, 20).

3. Système de rétroviseur selon la revendication 1 ou 2, comprenant en outre :
un support à patte (12a) adapté pour être fixé sur un véhicule, ledit support à patte (12a) comprenant une patte pour la fixation d'une partie capot décorative extérieure (22, 24, 26) fixée sur et couvrant ladite patte (12a) ;
ladite partie support de rétroviseur étant fixée à ladite patte et comportant une partie destinée à recevoir à l'intérieur un module de réglage de rétroviseur (46, 48), ladite partie support de rétroviseur (12) comprenant sur elle une structure de fixation (32, 34) ; et
ledit capot de rétroviseur (16, 18, 20) ayant une structure coopérante (38, 40) correspondant à ladite structure de fixation (32, 34) pour y fixer le capot.

4. Rétroviseur selon la revendication 3, dans lequel ledit support à patte et ladite partie support de rétroviseur sont pliables l'un par rapport à l'autre au moyen d'un mécanisme d'escamotage (42, 44).

5. Système de rétroviseur selon la revendication 4, dans lequel ledit mécanisme d'escamotage peut être, de façon interchangeable, un mécanisme d'escamotage manuel ou un mécanisme d'escamotage motorisé.

6. Système de rétroviseur selon l'une quelconque des revendications précédentes, dans lequel ledit miroir (18a, 20a) est réglable manuellement dans ladite partie support de rétroviseur (12).

7. Système de rétroviseur selon la revendication 6, dans lequel ledit miroir (18a, 20a) est réglable à distance depuis l'intérieur du véhicule.

8. Système de rétroviseur selon l'une quelconque des revendications 1 à 5, dans lequel ledit miroir (18a, 20a) est réglable électroniquement depuis l'intérieur du véhicule.

9. Système de rétroviseur selon la revendication 3, dans lequel une partie inférieure dudit support à patte (12a) forme une surface extérieure dudit boîtier de rétroviseur.

10. Système de rétroviseur selon la revendication 3, dans lequel la partie support de rétroviseur (12) est adaptée pour recevoir un module générique qui est insérable pour fournir un rétroviseur réglable manuellement du type sommet, un rétroviseur réglable électroniquement, un rétroviseur réglable manuellement à distance, ou un rétroviseur réglable électriquement à mémoire.

11. Système de rétroviseur selon la revendication 2, dans lequel ladite structure de support ajourée accepte une partie capot (16, 18, 20) choisie parmi une pluralité de dessins différents de parties capots ayant une structure de fixation conçue de façon commune (38, 40).

12. Système de rétroviseur selon l'une quelconque des revendications précédentes, dans lequel :
ledit support à patte (12a) comprend une structure de fixation (38) ;
ladite structure de fixation (38) permet la fixation d'un capot extérieur (22, 24, 26) choisi parmi une pluralité de capots extérieurs ayant des dessins propres avec une structure d'assemblage commune pour leur fixation sur ladite structure de fixation (38) dudit support à patte (12a) ; et
ladite partie support (12) est conçue pour supporter un module d'une pluralité de modules de commande de rétroviseur ayant des fonctions présélectionnées.

13. Procédé de fixation d'un capot interchangeable (16, 18, 20) sur une partie support de rétroviseur (12), ledit procédé comprenant les opérations consistant à :
prendre une partie support de rétroviseur (12), ladite partie support de rétroviseur (12) comportant une partie formant une surface visible extérieure du boîtier de rétroviseur assemblé ;
prendre un capot de rétroviseur (16, 18, 20) dans lequel est formée une ouverture (30), ledit capot de rétroviseur étant adapté pour entourer la partie afin de former une surface sensiblement continue lorsqu'il est assemblé, ledit capot de rétroviseur pouvant glisser sur la partie support de rétroviseur (12) pour fournir un capot extérieur au rétroviseur assemblé ; et
installer le capot de rétroviseur (16, 18, 20) sur la partie support de rétroviseur (12) afin d'assujettir ledit capot de rétroviseur (16, 18, 20) à ladite partie support de rétroviseur (12) et de former une surface visible extérieure continue pour le rétroviseur assemblé.

14. Procédé selon la revendication 13, comprenant en outre le fait de prendre un support à patte (12a) destiné à être fixé sur le véhicule, comprenant un cadre sous-jacent et un capot extérieur interchangeable (22, 24, 26) pour changer l'apparence esthétique dudit support.

15. Procédé selon la revendication 14, dans lequel la partie support de rétroviseur (12) et le support à patte (12a) sont fixés de manière escamotable l'un par rapport à l'autre.

16. Procédé selon la revendication 15, dans lequel ladite fixation escamotable est interchangeable entre un mécanisme d'escamotage manuel et un module d'escamotage motorisé.

17. Procédé selon la revendication 13, comprenant en outre le fait de fournir une pluralité de styles de capots de rétroviseur destinés à être montés sur ladite partie support (12) et de sélectionner un style particulier et de le fixer à la partie support (12).

18. Procédé selon la revendication 13, dans lequel ladite partie support de rétroviseur (12) comporte une partie recevant un module de commande destinée à recevoir un module de commande de rétroviseur interchangeable, ledit procédé comprenant en outre le fait de fournir un module de support interchangeable, et d'assembler par pression le module dans ladite partie support de rétroviseur (12) avant d'installer ledit capot de rétroviseur (16, 18, 20).

19. Procédé selon la revendication 13, dans lequel ladite partie de ladite partie support de rétroviseur (12) est une surface visible extérieure et forme une partie inférieure du boîtier de rétroviseur assemblé.
